(19) Europäisches Patentamt European Patent Office Office européen des brevets

(11) **EP 3 338 147 B1**

(12) **FASCICULE DE BREVET EUROPEEN**

(45) Date de publication et mention de la délivrance du brevet:
**30.09.2020 Bulletin 2020/40**

(51) Int Cl.:
***G05B 13/04*** *(2006.01)*

(21) Numéro de dépôt: **16770040.0**

(22) Date de dépôt: **18.08.2016**

(86) Numéro de dépôt international:
**PCT/FR2016/052090**

(87) Numéro de publication internationale:
**WO 2017/029456 (23.02.2017 Gazette 2017/08)**

(54) **SYSTÈME DE RÉGULATION D'UN PARAMÈTRE RÉGULÉ**

SYSTEM ZUR STEUERUNG EINES GESTEUERTEN PARAMETERS

SYSTEM FOR CONTROLLING A CONTROLLED PARAMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.08.2015 FR 1557808**

(43) Date de publication de la demande:
**27.06.2018 Bulletin 2018/26**

(73) Titulaire: **Safran Aircraft Engines**
**75015 Paris (FR)**

(72) Inventeur: **DJELASSI, Cédrik**
**77550 Moissy-Cramayel (FR)**

(74) Mandataire: **Regimbeau**
**87 rue de Sèze**
**69477 Lyon Cedex 06 (FR)**

(56) Documents cités:
**EP-A2- 1 523 102       EP-A2- 2 154 588**
**WO-A2-01/92972        DE-B3-102005 004 632**
**US-A1- 2006 241 786**

• **AHMET M HAVA ET AL: "Carrier-Based PWM-VSI Overmodulation Strategies: Analysis, Comparison, and Design", IEEE TRANSACTIONS ON POWER ELECTRONICS, INSTITUTE OF ELECTRICAL AND ELECTRONICS ENGINEERS, USA, vol. 13, no. 4, 1 juillet 1998 (1998-07-01), XP011043188, ISSN: 0885-8993**

**Description**

DOMAINE TECHNIQUE GENERAL ET CONTEXTE DE L'INVENTION

Le domaine de la présente invention est celui des systèmes de régulation d'un paramètre régulé d'un dispositif d'équipement aéronautique, et s'applique avantageusement à un dispositif de propulsion d'un aéronef. Le fonctionnement d'un dispositif équipant un aéronef, tel qu'un propulseur, est très complexe, mettant en jeu de nombreux paramètres, et les contraintes de sécurité propres à l'aéronautique nécessitent une régulation particulièrement précise et sûre. L'invention est avantageusement applicable aux turbopropulseurs et plus particulièrement à la détermination d'une commande pour l'asservissement de la puissance d'un tel turbopropulseur et à l'asservissement de la vitesse de son hélice.

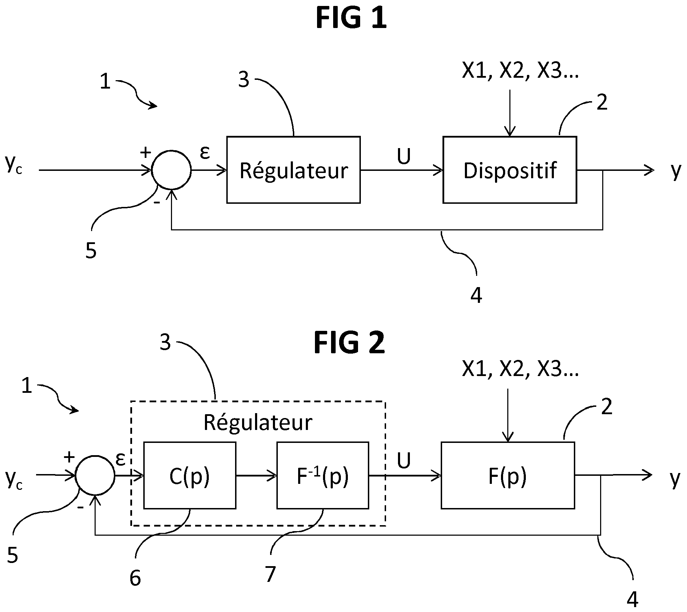

Plus généralement, la figure 1 illustre un système 1 de régulation par asservissement à une consigne $Y_c$ d'un paramètre régulé Y d'un dispositif physique 2. La régulation vise à maintenir au moins une grandeur physique, appelé paramètre régulé, égale à une valeur désirée, appelée consigne, par action sur une grandeur réglante, au moyen d'une commande U. Le système 1 comprend un régulateur 3 délivrant ladite commande U et prenant en entrée la sortie $\varepsilon$ d'un différentiateur 5 délivrant la différence entre une boucle de retour 4 du paramètre régulé Y et la consigne $Y_c$.

Un tel système est couramment utilisé en automatique pour asservir le paramètre régulé Y à la consigne $Y_c$. La difficulté réside dans la détermination de la fonction de transfert du régulateur 3. En effet, c'est cette fonction de transfert qui détermine le comportement du dispositif 2, via la commande U. Pour des dispositifs simples, il est aisé de déterminer la forme de la fonction de transfert du régulateur 3 pour obtenir une réponse du dispositif 2 qui satisfasse aux exigences de rapidité et de sécurité requises. En revanche, dès lors que le dispositif devient complexe, concevoir un régulateur 3 acceptable devient compliqué, voire impossible.

Notamment, pour des dispositifs 2 dont la sortie, c'est-à-dire le paramètre régulé Y, dépend, outre de la commande U, de nombreux paramètres variables, dits paramètres d'entrée, les techniques classiques de déterminateur de la fonction de transfert du régulateur 3 ne sont plus applicables. Ceci est en particulier vrai lorsque les relations entre la commande U, les paramètres d'entrée et le paramètre régulé Y font intervenir des non-linéarités.

WO0192972 décrit un procédé et un appareil permettant de contrôler un appareil dynamique doté de multiples entrées et fonctionnant au sein d'un environnement présentant de multiples paramètres de fonctionnement.

PRESENTATION DE L'INVENTION

La présente invention a pour but de remédier aux inconvénients de l'état de la technique en proposant un système de régulation d'un paramètre régulé d'un dispositif d'équipement aéronautique, ledit paramètre régulé étant régi par une loi de fonctionnement liant ledit paramètre régulé à une commande et à une pluralité de paramètres d'entrée, ledit système de régulation comprenant une boucle de régulation asservissant ledit paramètre régulé à une consigne au moyen de la commande contrôlant le dispositif,
remarquable en ce que le système comprend un module de compensation de la loi de fonctionnement et un module de détermination d'un gain local configuré pour déterminer le gain local d'une partie statique d'un modèle de la loi de fonctionnement représentatif du gain dudit paramètre régulé en réponse à une variation de ladite commande dans un régime de fonctionnement stabilisé de ladite loi de fonctionnement, ladite partie statique du modèle de la loi de fonctionnement regroupant les relations indépendantes du temps entre le paramètre régulé, la commande et la pluralité de paramètres d'entrée, ledit modèle de la loi de fonctionnement comprenant également une partie dynamique regroupant les relations dépendant du temps entre le paramètre régulé, la commande et la pluralité de paramètres d'entrée, ledit module de compensation de la loi de fonctionnement faisant intervenir l'inverse dudit gain local.

La prise en compte dans un module de compensation de la loi de fonctionnement de l'inverse d'un gain local ainsi déterminé permet de compenser la loi de fonctionnement même en cas de non-linéarités dans la loi de fonctionnement. On peut ainsi asservir le paramètre régulé en s'affranchissant de ces non-linéarités.

Le système est avantageusement complété par les caractéristiques suivantes, prises seules ou en une quelconque de leur combinaison techniquement possible :

- le gain local est calculé à partir des valeurs prises par les sorties d'une partie statique d'un modèle de la loi de fonctionnement pour au moins deux valeurs distinctes de la commande U en conservant constants les paramètres d'entrée;
- la différence entre les deux valeurs distinctes de la commande est inférieure à 0,25% de la plage de variation de ladite commande et/ou la différence entre les deux valeurs distinctes de la commande correspond à une variation de ladite commande entrainant une variation du paramètre régulé inférieure à 1 % de la plage de variation dudit paramètre régulé;
- le module de détermination du gain local est configuré pour délivrer une valeur de saturation prédéterminée lorsque le gain local calculé par ledit module de détermination est en-deçà d'une valeur prédéfinie;

- le module de détermination du gain local est configuré pour qu'au moins à chaque changement de la commande et/ou des paramètres d'entrée, un nouveau gain local soit déterminé, afin de refléter lesdits changements;
- la boucle de régulation comprend un régulateur constitué en série d'un correcteur et dudit module de compensation de la loi de fonctionnement, la commande correspondant à la sortie du régulateur;
- le module de compensation de la loi de fonctionnement comprend également une première fonction de transfert de l'inverse de la partie dynamique du modèle de la loi de fonctionnement;
- le modèle de la loi de fonctionnement comprend une partie inversable et une partie non inversable, et le module de compensation de la loi de fonctionnement comprend une compensation statique qui correspond à l'inverse du gain local K et une compensation dynamique comprenant une chaîne directe et une chaîne de retour constituant une boucle de rétroaction, dans lequel la chaîne directe comprend une deuxième fonction de transfert faisant intervenir l'inverse de la partie inversable du modèle de la loi de fonctionnement et la chaîne de retour comprend une troisième fonction de transfert faisant intervenir la partie non inversable du modèle de la loi de fonctionnement.

L'invention concerne également ensemble comprenant un dispositif d'équipement aéronautique et un système de régulation dudit dispositif selon l'invention.

PRESENTATION DES FIGURES

L'invention sera mieux comprise, grâce à la description ci-après, qui se rapporte à un exemple de réalisation préféré, donné à titre d'exemple non limitatif et expliqué avec référence aux dessins schématiques annexés, dans lesquels:

- la figure 1, déjà discutée, est un schéma illustrant un système de régulation par asservissement à une consigne d'un paramètre régulé d'un dispositif physique;
- les figures 2, 3 et 4 sont des schémas illustrant un système de régulation par asservissement à une consigne d'un paramètre régulé d'un dispositif physique selon des modes de réalisation possible de l'invention;
- les figures 5 à 9 sont des schémas illustrant un exemple de mode de réalisation de l'invention.

Sur les différentes figures, des références numériques identiques désignent des éléments similaires ou équivalents.

DESCRIPTION DETAILLEE

Dans la présente description, on entend par module un ensemble de moyens techniques mis en œuvre pour remplir la fonction du module. Typiquement, il s'agit d'équations et de calculs dont les fonctions sont liées et peuvent être regroupées. La présente invention est mise en œuvre par un calculateur et ses accessoires (mémoire, entrée/sorties) qui constituent ainsi la partie structurelle du système de régulation. Par ailleurs, dans la mesure où un modèle se traduit par une suite d'équations, on pourra utiliser indifféremment pour désigner un modèle les termes fonction de transfert ou modèle, le terme modèle impliquant toutefois la nécessité de rendre compte d'une loi de fonctionnement d'un système physique modélisé par ledit modèle.

On a représenté sur la figure 2 le principe d'un système 1 selon l'invention. Comme pour la figure 1, il s'agit d'un système 1 de régulation par asservissement à une consigne $Y_c$ d'un paramètre régulé Y d'un dispositif physique 2.

Le système 1 comprend une boucle de régulation asservissant le paramètre régulé Y à une consigne $Y_c$ en commandant le dispositif 2 par la commande U. Cette boucle de régulation comprend un régulateur 3 délivrant la commande U et prenant en entrée la sortie d'un différentiateur 5 délivrant la différence entre une boucle de retour 4 du paramètre régulé Y et la consigne $Y_c$.

Le paramètre régulé Y est régi par une loi de fonctionnement liant ledit paramètre régulé Y à une commande U et à une pluralité de paramètres d'entrée X1, X2, X3.... Cette loi de fonctionnement est modélisable par une fonction de transfert F(p), modèle mathématique de la relation entre la commande U, les paramètres d'entrée $X_i$ et paramètre régulé Y.

Le régulateur 3 est construit à partir de deux modules en série : un correcteur 6 avec une fonction de transfert C(p) et un module 7 de compensation de la loi de fonctionnement avec une fonction de transfert $F^{-1}(p)$. De préférence, comme représenté, le correcteur 6 et le module 7 de compensation sont en série dans la chaîne directe de la boucle de régulation, avec le correcteur 6 en amont du module 7 de compensation. D'autres configurations sont néanmoins possibles. La commande U correspond à la sortie du régulateur 3, et donc à la sortie du correcteur 6 ou du module 7 de compensation.

La fonction de transfert $F^{-1}(p)$ du module 7 de compensation est l'inverse de la fonction de transfert F(p) modélisant le dispositif 2 et correspond donc à l'inverse du modèle de la loi de fonctionnement. De ce fait, puisque $F^{-1}(p) \cdot F(p)=1$, le module de compensation compense effectivement la loi de fonctionnement. On parle de correction par modèle inverse. Elle vise à utiliser dans la chaine de correction une inversion en ligne du modèle de la loi de fonctionnement du dispositif 2 de manière à compenser les pôles et les zéros du processus ainsi que le gain statique. L'inversion du modèle de la loi de fonctionnement permet une compensation théorique complète, tributaire cependant d'une modélisation représentative de la loi de fonctionnement. Par cette compensation, le correcteur 6 peut être facilement conçu de sorte à atteindre la dynamique et la précision désirée.

Cependant, l'inversion de la fonction de transfert du modèle de la loi de fonctionnement nécessite que celle-ci soit entièrement inversable ou que les éléments non inversables soient négligeables. De fait, certains processus physiques sont intrinsèquement non inversables, et par ailleurs, la modélisation peut faire apparaître des non-linéarités pour mieux rendre compte du processus réel.

En effet, en pratique la fonction de transfert F(p) modélisant la loi de fonctionnement n'est jamais explicite. L'automaticien dispose souvent d'un modèle de type équation physique $f$ avec une dépendance du paramètre régulé Y non seulement à la commande U mais également à plusieurs paramètres d'entrées $X_i$ :

$$ Y = f(U, X_1, X_2, X_3, ...) $$

avec Y le paramètre à réguler, c'est-à-dire la sortie délivrée par le modèle de la loi de fonctionnement, U la commande, et X1, X2, X3... étant des paramètres d'entrée qui influent sur la loi de fonctionnement. Le modèle de la loi de fonctionnement peut être déterminé par les relations physiques entre différentes variables connues, c'est-à-dire par l'analyse, et/ou par identification. La fonction de transfert F(p) est déterminée à partir de ce modèle pour en refléter le fonctionnement.

Généralement, le modèle $f$ de la loi de fonctionnement comprend deux parties : une partie statique et une partie dynamique. La partie statique du modèle de la loi de fonctionnement regroupe les relations indépendantes du temps entre le paramètre régulé Y, la commande U et la pluralité de paramètres d'entrée $X_i$. La partie dynamique du modèle de la loi de fonctionnement regroupe les relations dépendant du temps entre le paramètre régulé Y, la commande U et la pluralité de paramètres d'entrée $X_i$.

On peut noter ainsi le modèle de la loi de fonctionnement :

$$ Y = K(U, X_1, X_2, X_3, ...) \cdot f'(U, X_1, X_2, X_3, ...) $$

$K(U, X_1, X_2, X_3, ...)$ représente la partie statique, représentative de la loi de fonctionnement en régime stabilisé, c'est-à-dire lorsque la commande U et la pluralité de paramètres d'entrée $X_i$ sont constants dans le temps pendant suffisamment longtemps pour que soient négligeables les effets des phases transitoires. Ainsi, en régime stabilisé:

$$ Y = K(U, X_1, X_2, X_3, ...) $$

On détermine les éléments de la partie statique soit par identification en régime stabilisé, soit par analyse.

$f'(U, X_1, X_2, X_3, ...)$ représente la partie dynamique, représentative des effets sur la loi de fonctionnement des variations temporelles de la commande U et/ou de la pluralité de paramètres d'entrée $X_i$. En régime stabilisé:

$$ f'(U, X_1, X_2, X_3, ...) = 1 $$

On peut écrire cette partie dynamique $f'(p)$ comme une fonction de transfert de gain statique unitaire :

$$ f'(U, X_1, X_2, X_3, ...) = \frac{1 + a_1 p + b_1 p^2 + c_1 p^3 \, ...}{1 + a_2 p + b_2 p^2 + c_2 p^3 \, ...} $$

avec $a_1$, $a_2$, $b_1$, $b_2$, $c_1$, $c_2$, ... des paramètres fonctions des entrées U, X1, X2, X3.... On détermine les éléments de la partie dynamique soit par identification en régime transitoire, soit par analyse.

On cherche à inverser la fonction de transfert du modèle de la loi de fonctionnement pour obtenir $F^{-1}(p)$, de sorte que $F(p) \cdot F^{-1}(p)=1$. L'inversion de la fonction de transfert du modèle de la loi de fonctionnement ne pose pas de problème pour ce qui est de sa partie dynamique :

$$f'^{-1}(U, X_1, X_2, X_3, \dots) = \frac{1 + a_2 p + b_2 p^2 + c_2 p^3 \dots}{1 + a_1 p + b_1 p^2 + c_1 p^3 \dots}$$

Concernant la partie statique en revanche, il peut être difficile de l'inverser lorsque la fonction K est complexe, contient des non-linéarités et/ou dépend beaucoup des paramètres d'entrée $X_i$.

La solution est de calculer un gain local de la partie statique d'un modèle de la loi de fonctionnement représentatif du gain $\Delta Y$ du paramètre régulé Y en réponse à une variation $\Delta U$ de la commande U dans un régime de fonctionnement stabilisé de ladite loi de fonctionnement:

$$gain\ local\ (U, X_1, X_2, X_3, \dots) = \frac{\Delta Y}{\Delta U} = K$$

Ce calcul est mis en œuvre par un module de détermination du gain local, au sein même du calculateur chargé de la régulation du paramètre régulé Y. Le module de détermination du gain local est configuré pour qu'au moins à chaque changement de la commande U et/ou des paramètres d'entrée $X_i$, un nouveau gain local soit déterminé, afin de refléter lesdits changements. Concrètement, le gain local est calculé en temps réel à chaque pas de temps du calcul de la régulation, afin de mettre à jour ledit gain local.

Il est à noter que la prise en compte de la seule inversion de la partie statique permet d'obtenir un gain statique unitaire pour l'ensemble régulateur-dispositif, et que la compensation de la partie dynamique n'est pas toujours nécessaire. C'est le cas par exemple lorsque le système a une dynamique rapide et linéaire, dans ce cas le réglage du correcteur 6 permet de compenser facilement la dynamique sans avoir besoin d'inverser la dynamique du système.

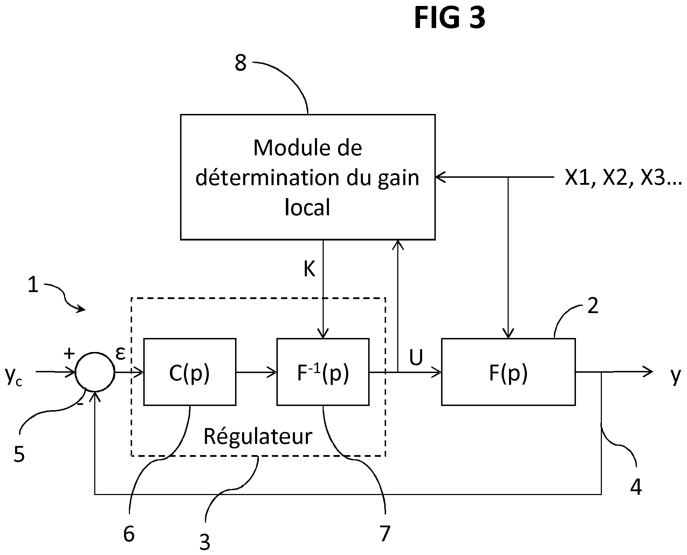

La figure 3 montre l'arrangement de ce module de détermination du gain local 8 dans un système similaire à celui de la figure 2. Le module de détermination du gain local 8 reçoit en entrée les paramètres d'entrée $X_i$, c'est-à-dire X1, X2, X3, ainsi que la commande U, et délivre le gain local au module de compensation 7 du régulateur 3.

Plus précisément, le module de détermination du gain local 8 calcule le gain local à partir des valeurs prises par les sorties de la partie statique d'un modèle de la loi de fonctionnement pour au moins deux valeurs distinctes de la commande U en conservant constants les paramètres d'entrée:

$$gain\ local\ (U, X_1, X_2, X_3, \dots) = \frac{K(U, X_1, X_2, X_3, \dots) - K(U + \Delta U, X_1, X_2, X_3, \dots)}{\Delta U}$$

Les deux valeurs distinctes de la commande sont séparées en valeur par une différence $\Delta U$. Cette différence $\Delta U$ est choisie suffisamment petite pour rester dans le domaine linéaire de la partie statique de la fonction de transfert du modèle de la loi de fonctionnement, c'est-à-dire qu'il est possible de négliger d'éventuelles non-linéarités autour du point de fonctionnement courant du système.

De préférence, la différence $\Delta U$ entre les deux valeurs distinctes de la commande U est inférieure à 0,25% de la plage de variation de ladite commande U et/ou la différence $\Delta U$ entre les deux valeurs distinctes de la commande U correspond à une variation de ladite commande U entraînant une variation $\Delta Y$ du paramètre régulé Y inférieure à 1 % de la plage de variation dudit paramètre régulé Y. Dans la mesure où on est dans le domaine linéaire de la partie statique, on peut approximer la variation $\Delta Y$ du paramètre régulé par:

$$\Delta Y = |K(U, X_1, X_2, X_3, \dots) - K(U + \Delta U, X_1, X_2, X_3, \dots)|$$

Ce gain local une fois déterminé par le module de détermination du gain local 8 est utilisé par le module 7 de compensation de la loi de fonctionnement. Plus précisément, le module 7 fait intervenir l'inverse du gain local. En reprenant les notations précédentes, l'inverse de la fonction de transfert du modèle de la loi de fonctionnement peut ainsi s'écrire:

$$f^{-1}(p) = \frac{1}{gain\ local} f'^{-1}(U, X_1, X_2, X_3, \dots)$$

soit:

$$f^{-1}(p) = \frac{K(U, X_1, X_2, X_3, \ldots) - K(U + \Delta U, X_1, X_2, X_3, \ldots)}{\Delta U} \cdot \frac{1 + a_2 p + b_2 p^2 + c_2 p^3 \ldots}{1 + a_1 p + b_1 p^2 + c_1 p^3 \ldots}$$

Puisque la fonction de transfert du module de compensation 7 a été élaborée pour théoriquement compenser la fonction de transfert du modèle du dispositif 2, on a

$$F^{-1}(p) \cdot F(p) = 1$$

La fonction de transfert C(p) du correcteur 6 peut donc être élaborée sans se soucier des non-linéarités de la loi de fonctionnement du dispositif 2, pour faire en sorte que la fonction de transfert en boucle fermée répond au besoin de contrôle souhaité. On peut par exemple choisir la fonction de transfert C(p) du correcteur 6 de manière à admettre une intégration dans la boucle de régulation et ainsi assurer l'annulation de l'erreur permanente sur le paramètre régulé Y pour la consigne Yc de type échelon. Dans ce cas le choix d'un gain dans la fonction de transfert C(p) du correcteur 6 permet de régler la réponse en boucle fermée afin de satisfaire aux exigences de temps de réponse, indépendamment du comportement du dispositif puisque sa loi de fonctionnement est compensée.

Certaines fonctions de transfert du modèle de la loi de fonctionnement peuvent présenter des particularités qui peuvent être prises en compte. C'est notamment le cas lorsque le dispositif 2 possède une hystérésis. C'est par exemple le cas de vannes pneumatiques.

Avec un tel dispositif 2 présentant une hystérésis, lors de l'inversion du sens de la commande U, le paramètre régulé Y ne réagit qu'après que la commande ait parcouru l'hystérésis. Du point de vue du correcteur 3, cela correspond à un gain local qui tend vers 0. C'est-à-dire que dans l'intervalle de l'hystérésis, la variation de la commande U ne produit pas d'évolution du paramètre régulé Y. En d'autres termes, dans l'intervalle de l'hystérésis, la commande U n'a pas d'effet sur la sortie, i.e. le paramètre régulé Y, tant que la commande U n'est pas sortie de l'hystérésis.

On a donc

$$K(U, X_1, X_2, X_3, \ldots) - K(U + \Delta U, X_1, X_2, X_3, \ldots) = 0$$

Le gain local est donc nul. Or, le gain local étant inversé pour compenser le gain de la loi de fonctionnement du dispositif 2, le gain du module de compensation tend vers l'infini, ce qui correspond à une commande U infiniment grande. On peut donc prévoir que le module de détermination du gain local soit configuré pour délivrer une valeur de saturation prédéterminée lorsque le gain local calculé par ledit module de détermination est en-deçà d'une valeur prédéfinie, en valeur absolue.

Cette valeur de saturation permet d'éviter une exception logicielle qu'entrainerait la division par zéro lors de l'inversion du gain local. Ensuite, cette valeur de saturation est choisie, typiquement très petite, de sorte qu'une fois inversée elle maximise la commande générée par le régulateur 3. Cela permet de générer une commande rapide qui permet le parcours de l'intervalle de l'hystérésis dans un délai minimal. On améliore ainsi la performance de la régulation malgré la présence d'une hystérésis.

Une autre particularité pouvant être prise en compte est par exemple la présence d'une partie non inversable dans la fonction de transfert du modèle de la loi de fonctionnement. C'est par exemple le cas pour un retard pur. Cette partie non-inversable n'est alors pas compensable, mais sa prise en compte dans le module 7 de compensation de la loi de fonctionnement permet de compenser la partie inversable de du modèle de la loi de fonctionnement.

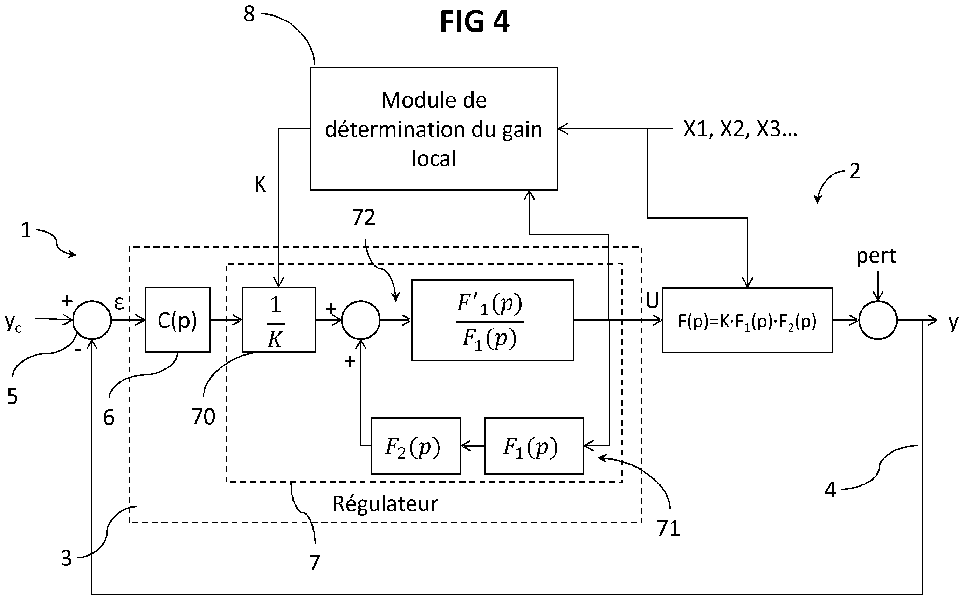

En référence à la figure 4, on a représenté un exemple de prise en compte de cette partie non inversable dans le module 7 de compensation. On note $F_1(p)$ la partie inversable du modèle, $F_2(p)$ la partie non inversable, et K le gain statique de sorte que

$$F(p) = K \cdot F_1(p) \cdot F_2(p)$$

A titre illustratif, la loi de fonctionnement est modélisée ici par cette fonction de transfert additionnée des perturbations pert.

Le module 7 de compensation de la loi de fonctionnement comprend tout d'abord une compensation statique 70 qui correspond à l'inverse du gain local K puis une compensation dynamique, en aval de la compensation statique 70, comprenant une chaîne directe 72 et une chaîne de retour 71 constituant une boucle de rétroaction. La chaîne directe 72 comprend une fonction de transfert faisant intervenir l'inverse de la partie inversable du modèle de la loi de fonctionnement. Cet inverse permet de compenser la partie inversable du modèle de la loi de fonctionnement. La fonction de transfert de la chaîne directe 72 comprend également une fonction de transfert $F'_1(p)$ correspondant à la dynamique souhaitée pour la fonction de transfert en boucle fermée. Ainsi, la fonction de transfert de la chaîne directe 72 correspond à :

$$\frac{F'_1(p)}{F_1(p)}$$

La chaîne de retour 71 comprend la fonction de transfert $F_2(p)$ faisant intervenir la partie non inversable du modèle de la loi de fonctionnement. La chaîne de retour 71 comprend également la fonction de transfert $F_1(p)$ correspondant à la partie inversable du modèle de la loi de fonctionnement. Ainsi, la fonction de transfert de la chaîne de retour 71 correspond à $F_2(p) \cdot F_1(p)$. La sortie de cette chaîne de retour 71 est sommée à la sortie de la compensation statique 70 pour former l'entrée de la chaîne directe 72, dont la sortie est la commande U et est également l'entrée de la chaîne de retour 71.

L'étude de la fonction de transfert en boucle fermée (FTBF) de ce système de régulation permet de mettre en évidence ses avantages. En calculant la FTBF, on obtient:

$$Y = \frac{C(p) \cdot F_2(p) \cdot F'_1(p)}{1 + F_2(p) \cdot F'_1(p)[C(p) - 1]} Y_c + \frac{pert \cdot [1 - F_2(p) \cdot F'_1(p)]}{1 + F_2(p) \cdot F'_1(p)[C(p) - 1]}$$

Dans un premier cas, $F_2(p) = 1$, c'est-à-dire que $F(p)$ est entièrement inversable, ce qui correspond aux cas évoqués auparavant. On obtient alors la FTBF suivante:

$$Y = \frac{C(p) \cdot F'_1(p)}{1 + F'_1(p)[C(p) - 1]} Y_c + \frac{pert \cdot [1 - F'_1(p)]}{1 + F'_1(p)[C(p) - 1]}$$

Si on choisit $C(p) = 1$, il vient alors

$$Y = F'_1(p) \cdot Y_c + pert \cdot [1 - F'_1(p)]$$

Le correcteur 6 permet donc d'imposer la dynamique souhaitée à l'ensemble sans erreur statique, et la perturbation peut être efficacement rejetée en choisissant une dynamique rapide pour $F'_1(p)$. Le système trouve un intérêt accru lorsque la partie non inversable est suffisamment modélisable. C'est le cas pour un retard pur.

En notant Tr le retard, la fonction de transfert du retard pur s'exprime comme:

$$F_2(p) = e^{-Tr \cdot p} \cdot F'_1(p) \cdot Y_c + pert \cdot [1 - e^{-Tr \cdot p} \cdot F'_1(p)]$$

Si le retard est connu, il n'affecte pas la stabilité de la FTBF. Cependant, le rejet de la perturbation est affecté par le retard. Cependant, en cas de retard important, il est intéressant de choisir le correcteur 6 de manière à améliorer l'efficacité de rejection.

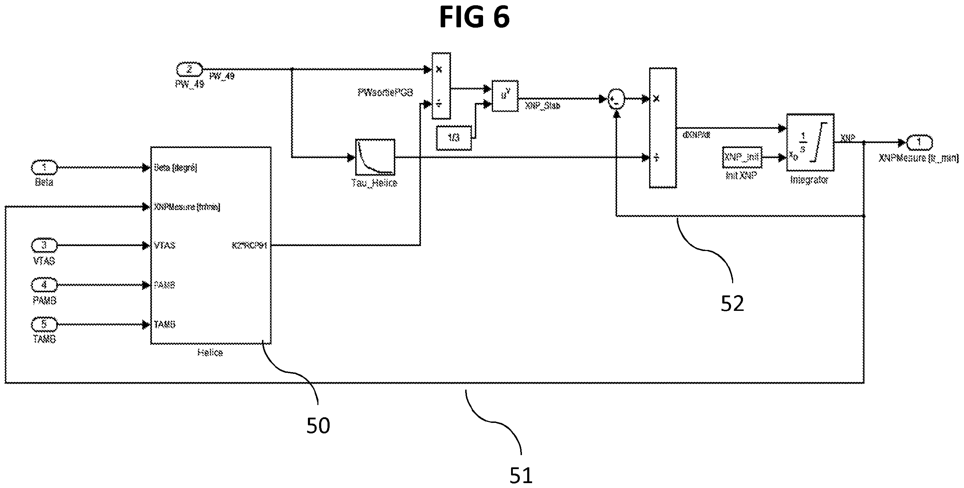

L'exemple non limitatif qui suit est fait dans le cas où le dispositif est un turbopropulseur, et le paramètre régulé est la vitesse de rotation de l'hélice XNP, la commande étant le pas de l'hélice $\beta$. La commande $\beta$ est identifiée par Beta sur les figures 6 à 9. L'exemple illustre l'application de l'invention pour le calcul de $F^{-1}(p)$ en référence dans la figure 3, qui correspond à un mode de réalisation possible de l'invention.

On a regroupé dans le tableau 1 ci-dessous différents éléments intervenant dans le modèle de la loi de fonctionnement.

Tableau 1

| Notation | Signification | Unité |
|---|---|---|
| $GR$ | Rapport de réduction du réducteur: $\omega_P = \dfrac{\omega_L}{GR}$ $GR$ | - |
| $J_P$ | Moment d'inertie polaire de l'hélice | kg.m² |
| $J_L$ | Moment d'inertie polaire du rotor BP : turbine de puissance + arbre BP (Basse Pression) | kg.m² |
| $Pw_P$ | Puissance (aérodynamique) absorbée par l'hélice | w |
| $Pw_{49}$ | Puissance (aérodynamique) délivrée par la turbine de puissance | W |
| $TRQ_P$ | Couple aérodynamique absorbé par l'hélice. Il s'agit d'un couple résistant. | N.m |
| $TRQ_{49}$ | Couple aérodynamique délivré par la turbine de puissance. Il s'agit d'un couple moteur. | N.m |
| $\omega_P$ | Vitesse de rotation de l'hélice | rad/s |
| XNP | Vitesse de rotation de l'hélice | Tours/ minute |
| $\omega_L$ | Vitesse de rotation du corps BP | rad/s |
| Beta | Angle de pas de l'hélice | degré |
| $J_{Tot}$ | $\left(J_L + \dfrac{J_P}{GR^2}\right) GR^2 = J_{Tot}$, Moment d'inertie de l'ensemble hélice + turbine de puissance + arbre BP | |
| RCP91 | Coefficient de puissance hélice | |
| DIA91 | DIA91 = diamètre hélice | |
| $\rho$ | Densité de l'air | Kg/m3 |
| A91 | $A91 = \dfrac{\pi}{4} * DIA91^2 * (1 - XNU91^2) = $ coefficient de traction | - |
| XNU91 | Rapport de moyeu | - |
| RJ91 | $RJ91 = \dfrac{VTAS * 0.5144444}{DIA91 * \frac{XNP}{60}} = $ coefficient d'avancement | - |
| VTAS | True Air Speed (vitesse d'avancement avion) | kts |
| PAMB | Pression atmosphérique | Pascal |
| TAMB | Température atmosphérique | Degrés Kelvin |

On établit tout d'abord le modèle de la loi de fonctionnement liant β (ou Beta) à XNP. On part de l'expression simplifiée du corps de puissance reliant XNP à la différence de couple Turbine Basse Pression (BP) et Hélice:

$$TRQ_{49} - \frac{TRQ_P}{GR} = \left(J_L + \frac{J_P}{GR^2}\right) \frac{d\omega_L}{dt}$$

or,

$$\omega_P = \frac{\omega_L}{GR}$$

Ainsi

$$TRQ_{49} - \frac{TRQ_P}{GR} = \left(J_L + \frac{J_P}{GR^2}\right) GR \frac{d\omega_p}{dt}$$

On cherche à faire apparaître le terme en puissance:

$$GR \cdot TRQ_{49} - TRQ_P = \left(J_L + \frac{J_P}{GR^2}\right) GR^2 \frac{d\omega_p}{dt}$$

$$\omega_p \cdot GR \cdot TRQ_{49} - \omega_p \cdot TRQ_P = \left(J_L + \frac{J_P}{GR^2}\right) GR^2 \cdot \omega_p \cdot \frac{d\omega_p}{dt}$$

On pose

$$\left(J_L + \frac{J_P}{GR^2}\right) GR^2 = J_{Tot}$$

On obtient

$$Pw_{49} - Pw_P = J_{Tot} \cdot \omega_p \cdot \frac{d\omega_p}{dt}$$

avec $Pw_p$ (donné par le fabricant de l'hélice) tel que

$$Pw_p = 10^{-3} * RCP91 * \rho * \left(DIA91 * \frac{XNP}{60}\right)^3 * A91$$

On pose K2 constant:

$$K2 = 10^{-3} * \rho * \left(\frac{DIA91}{60}\right)^3 * A91$$

avec A91 le coefficient de traction constant

$$A91 = \frac{\pi}{4} * DIA91^2 * (1 - XNU91^2)$$

et RCP91 le coefficient de puissance hélice défini par le fabricant:

$$[RCP91] = f(Beta, RJ91, VTAS)$$

avec RJ91 étant le coefficient d'avancement (voir tableau 1).
Ainsi,

$$Pw_p = K2 * RCP91 * \rho * \left(\frac{XNP}{60}\right)^3$$

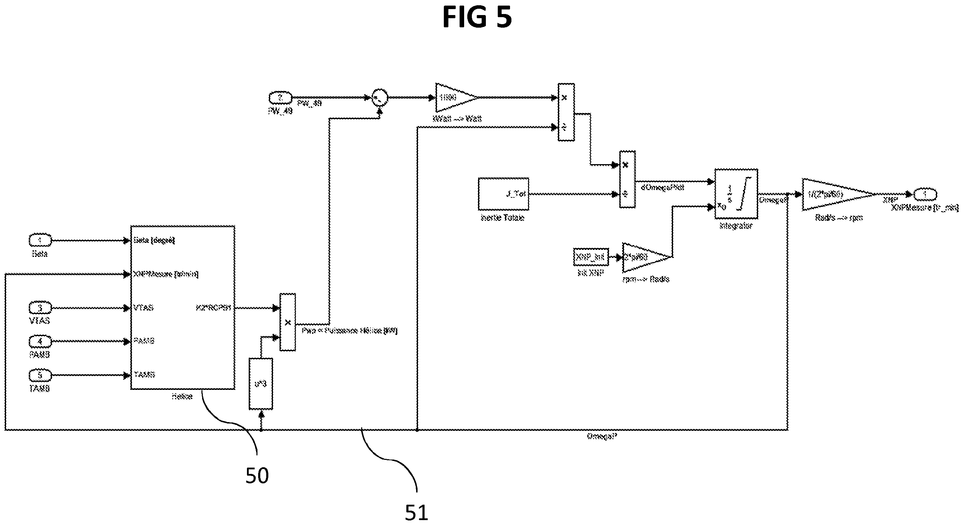

On obtient ainsi un modèle de l'évolution de la vitesse de l'hélice d'un turbopropulseur représenté sur la figure 5, dans laquelle le bloc 50 correspond au calcul du produit de la constante K2 par le coefficient de puissance hélice RCP91. Ce produit est multiplié par la vitesse de rotation de l'hélice $\omega_p$ (OmegaP) précédemment calculée, élevée au cube. Une boucle de retour 51 illustre la prise en compte de la vitesse de rotation de l'hélice par le bloc 50 et par la fonction cubique. On obtient ainsi la puissance absorbée par l'hélice $Pw_p$ en fonction de la commande $\beta$, de la mesure de la vitesse de rotation de l'hélice , via la boucle de retour 51, et de paramètres d'entrée comprenant la vitesse d'avancement de l'avion VTAS, la pression ambiante PAMB et la température ambiante TAMB. Cette puissance absorbée par l'hélice $Pw_p$ est soustraite à un autre paramètre d'entrée constitué par la puissance délivrée par la turbine de puissance $Pw_{49}$. Spécifiquement à l'exemple illustré, et en lien avec les unités employées, on doit convertir les unités de certaines grandeurs. Ainsi, les kilowatts de $Pw_p$ et de $Pw_{49}$ sont convertis en watt. Le résultat est divisé par la vitesse $\omega_P$, puis par l'inertie totale $J_{Tot}$. On intègre ensuite ce résultat en initialisant avec une vitesse initiale $XNP_{Init}$, que l'on convertit préalablement depuis des tours/minute en rad/s. On obtient après intégration la vitesse XNP, que l'on reconvertit depuis des rad/s en tours/minute.

On simplifie cette fonction de transfert de manière à faire apparaître un système passe-bas d'ordre 1, représentatif de la dynamique de l'hélice, dont la constante de temps Tau_helice est variable en fonction des entrées, et donc le gain correspond à la partie stabilisée de la vitesse de rotation XNP_Stab :

$$XNP = XNP\_Stab \cdot \frac{1}{1 + Tau\_helice \cdot P}$$

La figure 6 illustre cette fonction de transfert modifiée. On constate par rapport à la figure 5, la disparition de la prise en compte de la vitesse de rotation de l'hélice en sortie du bloc 50, via la boucle de retour 51 et la fonction cubique. A la place, le produit de la constante K2 par le coefficient de puissance hélice RCP91 correspond à la puissance absorbée par l'hélice $P_{wp}$ qui divise la puissance délivrée par la turbine de puissance $Pw_{49}$, et une fonction racine cubique est appliquée sur le résultat, pour donner la partie stabilisée de la vitesse de rotation XNP_Stab.

A la partie stabilisée de la vitesse de rotation XNP_Stab est soustraite la mesure de la vitesse de rotation XNP, via une boucle de retour 52. Le résultat est divisé par Tau_helice, puis intégré ensuite en initialisant avec une vitesse initiale $XNP_{Init}$ choisie nulle, pour donner la mesure de la vitesse de rotation $XNP_{mesure}$ en tours/minute.

La transformation de la fonction de transfert permet d'isoler la relation stabilisée entre les entrées et la vitesse de rotation en stabilisé XNP_Stab, de la relation transitoire. La relation stabilisée se calcule directement à partir du modèle ainsi transformé, mais l'expression analytique de la constante de temps du système passe bas d'ordre 1 n'est pas possible. On approxime alors la constante de temps Tau_helice comme étant une fonction de PW49 en identifiant la dynamique de XNP par des méthodes classiques d'identification, telles que l'application d'un échelon d'entrée en puissance et par mesure. Cette approximation est suffisamment fidèle pour permettre la synthèse de $F^{-1}(p)$ pour le contrôle de l'hélice.

Le calcul du gain local est établi comme expliqué plus haut, en calculant à partir de la partie statique du modèle les valeurs de XNP pour $\beta$ courant et pour $\beta+\Delta\beta$. On peut choisir par exemple $\Delta\beta=0,1°$, afin de ne pas sortir du domaine de linéarité autour du point de fonctionnement courant.

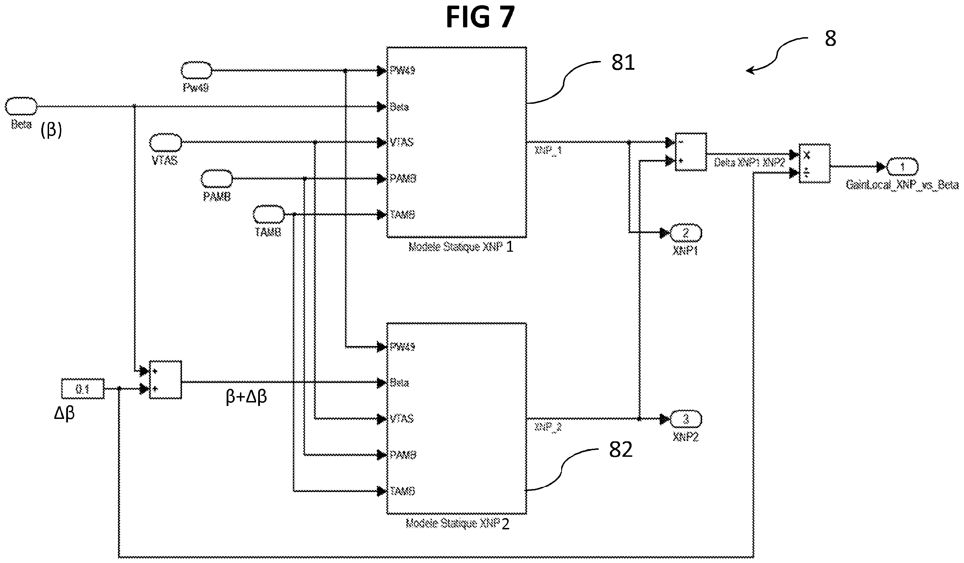

La figure 7 illustre l'implémentation du calcul du gain local telle qu'elle peut être faite dans un calculateur temps réel. Il s'agit donc du module de détermination 8 du gain local. Les deux blocs 81, 82 en parallèles prennent en entrée la mesure de la vitesse de rotation de l'hélice $\omega_P$ (OmegaP) la vitesse d'avancement de l'avion VTAS, la pression ambiante PAMB, la température ambiante TAMB, et la puissance délivrée par la turbine de puissance $Pw_{49}$. Le bloc 81 du dessus, noté Modele Statique XNP1, prend pour commande $\beta$ tandis que le bloc 82 du dessous, noté Modele Statique XNP2, prend pour commande $\beta+\Delta\beta$, et délivrent donc deux valeurs de XNP, notée XNP1 et XNP2. Il s'agit donc de blocs illustrant le modèle statique de la loi de fonctionnement. Après avoir fait la différence entre XNP1 et XNP2, et après division par $\Delta\beta$, on obtient la valeur du gain local, noté gain local XNP vs Beta.

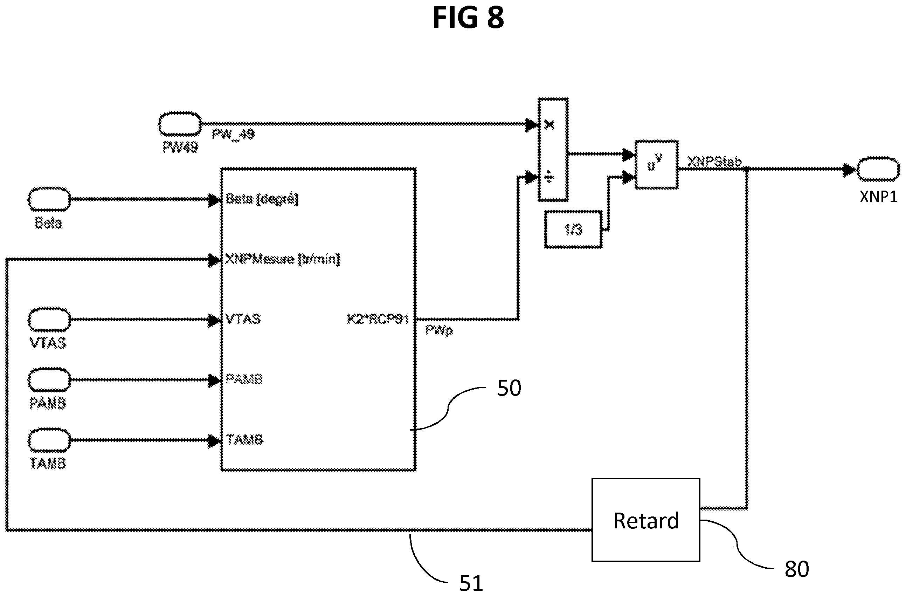

La figure 8 illustre la partie statique du modèle de la loi de fonctionnement schématisée par les blocs 81, 82 dans la figure 7, en l'occurrence celui du bloc 81 du dessus. On y retrouve le bloc 50 représenté sur la figure 5. Il s'agit en fait de la partie statique de la fonction de transfert illustrée par la figure 6 : on a supprimé la partie dynamique faisant intervenir le Tau_Helice et l'intégrateur. On constate également l'introduction d'un retard 80 d'un pas de calcul sur la boucle de retour 51 de la mesure du XNP pour que soit prise en compte la mesure du pas de calcul précédent, en remplacement de l'intégration.

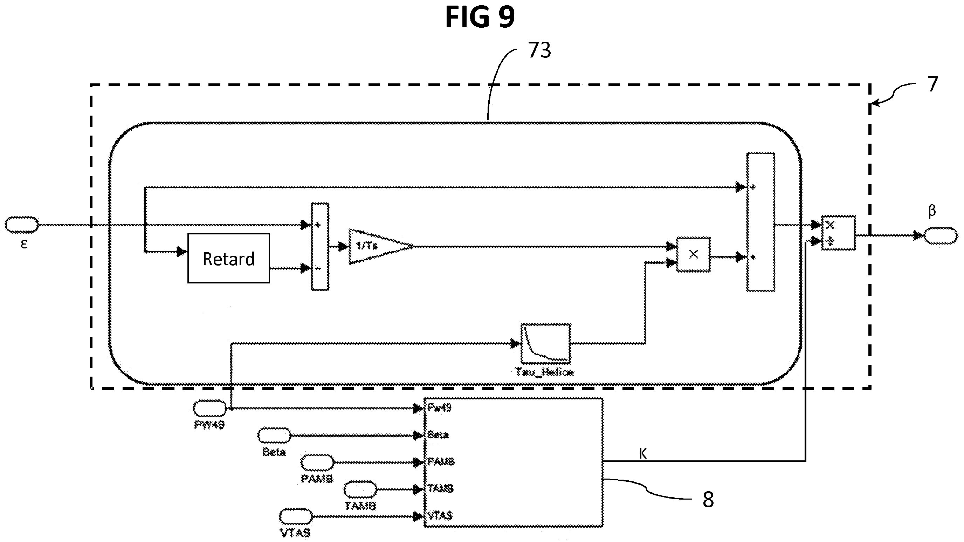

La compensation complète du modèle de la loi de fonctionnement liant XNP à $\beta$ est finalement réalisée en inversant le gain local et le filtre passe bas d'ordre 1 correspondant à la dynamique du système, comme illustré sur la figure 9. On y retrouve le module de détermination 8 du gain local K illustré par la figure 7, et le module de compensation 7 de la loi de fonctionnement, via le filtre passe-haut 73 constituant l'inverse de la partie dynamique (identifié à un passe-bas) divisé par le gain local K déterminé par le module 8. En entrée du filtre passe-haut d'ordre un 73, $\varepsilon$ est la différence entre une consigne de vitesse de rotation XNP et la mesure de la vitesse de rotation XNP. Dans le filtre passe-haut 73, la différence est faite entre le $\varepsilon$ courant et $\varepsilon$ précédemment calculé, symbolisé par le retard. Cette différence est divisée par Ts, représentant une partie de la constante de temps. Le résultat est multiplié par Tau_Helice, puis additionné à ε. La sortie du filtre passe-haut 73 est divisée par le gain local K calculé par le module 8. On obtient la commande β à appliquer.

## Revendications

1. Système de régulation (1) d'un paramètre régulé (Y) d'un dispositif d'équipement aéronautique (2), ledit paramètre régulé étant régi par une loi de fonctionnement dudit dispositif liant ledit paramètre régulé à une commande (U) et à une pluralité de paramètres d'entrée (X1, X2, X3, ...), ladite loi de fonctionnement étant modélisable par une fonction de transfert constituant un modèle mathématique de la relation entre la commande (U), les paramètres d'entrée (X1, X2, X3, ...) et le paramètre régulé (Y), ledit système de régulation comprenant une boucle de régulation asservissant ledit paramètre régulé à une consigne ($y_c$) au moyen de la commande (U) contrôlant le dispositif, **caractérisé en ce que** la boucle de régulation comprend un régulateur (3) comprenant en série un correcteur (6) et un module de compensation (7) de la loi de fonctionnement dont la fonction de transfert est destinée à compenser la fonction de transfert de la loi de fonctionnement, la commande (U) fournie au dispositif correspondant à la sortie du régulateur (3), le système comprenant en outre un module de détermination (8) d'un gain local recevant la commande (U) et les paramètres d'entrée (X1, X2, X3, ...) et configuré pour déterminer le gain local d'une partie statique d'un modèle de la loi de fonctionnement représentatif du gain dudit paramètre régulé en réponse à une variation de ladite commande (U) dans un régime de fonctionnement stabilisé de ladite loi de fonctionnement, ladite partie statique du modèle de la loi de fonctionnement regroupant les relations indépendantes du temps entre le paramètre régulé (Y), la commande (U) et la pluralité de paramètres d'entrée (X1, X2, X3, ...), ledit modèle de la loi de fonctionnement comprenant également une partie dynamique regroupant les relations dépendant du temps entre le paramètre régulé (Y), la commande (U) et la pluralité de paramètres d'entrée (X1, X2, X3), ledit module de compensation (7) de la loi de fonctionnement faisant intervenir l'inverse dudit gain local déterminé par le module de détermination (8).

2. Système selon la revendication 1, dans lequel le gain local est calculé à partir des valeurs prises par les sorties d'une partie statique d'un modèle de la loi de fonctionnement pour au moins deux valeurs distinctes de la commande en conservant constants les paramètres d'entrée.

3. Système selon la revendication 2, dans lequel la différence entre les deux valeurs distinctes de la commande est inférieure à 0,25% de la plage de variation de ladite commande et/ou la différence entre les deux valeurs distinctes de la commande correspond à une variation de ladite commande entrainant une variation du paramètre régulé inférieure à 1 % de la plage de variation dudit paramètre régulé.

4. Système selon l'une quelconque des revendications précédentes, dans lequel le module de détermination (8) du gain local est configuré pour délivrer une valeur de saturation prédéterminée lorsque le gain local calculé par ledit module de détermination est en-deçà d'une valeur prédéfinie.

5. Système selon l'une quelconque des revendications précédentes, dans lequel le module de détermination (8) du gain local est configuré pour qu'au moins à chaque changement de la commande U et/ou des paramètres d'entrée, un nouveau gain local soit déterminé, afin de refléter lesdits changements.

6. Système selon l'une quelconque des revendications précédentes, dans lequel le module de compensation (7) de la loi de fonctionnement comprend également une première fonction de transfert de l'inverse de la partie dynamique du modèle de la loi de fonctionnement.

7. Système selon l'une quelconque des revendications précédentes, dans lequel le modèle de la loi de fonctionnement comprend une partie inversable et une partie non inversable, et le module de compensation (7) de la loi de fonctionnement comprend une compensation statique (70) qui correspond à l'inverse du gain local K et une compensation dynamique comprenant une chaîne directe (72) et une chaîne de retour (71) constituant une boucle de rétroaction, dans lequel la chaîne directe comprend une deuxième fonction de transfert faisant intervenir l'inverse de la partie inversable du modèle de la loi de fonctionnement et la chaîne de retour comprend une troisième fonction de transfert faisant intervenir la partie non inversable du modèle de la loi de fonctionnement.

8. Ensemble comprenant un dispositif et un système de régulation dudit dispositif d'équipement aéronautique selon l'une quelconque des revendications précédentes.

**Patentansprüche**

1. System zur Regelung (1) eines geregelten Parameters (Y) einer Luftfahrtausrüstungsvorrichtung (2), wobei der geregelte Parameter durch ein Funktionsgesetz der Vorrichtung bestimmt wird, das den geregelten Parameter an eine Bedienung (U) und an eine Vielzahl von Eingangsparametern (X1, X2, X3, ...) bindet, wobei das Funktionsgesetz durch eine Transferfunktion modellierbar ist, die ein mathematisches Modell der Beziehung zwischen der Bedienung (U), den Eingangsparametern (X1, X2, X3, ...) und dem geregelten Parameter (Y) bildet, wobei das System zur Regelung einen Regelkreis umfasst, der den geregelten Parameter anhand der Bedienung (U), die die Vorrichtung kontrolliert, einem Sollwert ($y_c$) unterstellt,
   **dadurch gekennzeichnet, dass** der Regelkreis eine Regelung (3) umfasst, die in Reihe einen Korrektor (6) und ein Funktionsgesetzkompensationsmodul (7) umfasst, dessen Transferfunktion dazu bestimmt ist, die Transferfunktion des Funktionsgesetzes zu kompensieren, wobei die der Vorrichtung bereitgestellte Bedienung (U) dem Ausgang der Regelung (3) entspricht, das System weiter ein Lokalverstärkungsbestimmungsmodul (8) umfasst, das die Bedienung (U) und die Eingangsparameter (X1, X2, X3, ...) empfängt, und konfiguriert ist, um die lokale Verstärkung eines statischen Teils eines Modells des Funktionsgesetzes zu bestimmen, die repräsentativ für die Verstärkung des geregelten Parameters als Reaktion auf eine Variation der Bedienung (U) in einer stabilisierten Funktionsweise des Funktionsgesetzes ist,
   wobei der statische Teil des Modells des Funktionsgesetzes die zeitunabhängigen Beziehungen zwischen dem geregelten Parameter (Y), der Bedienung (U) und der Vielzahl von Eingangsparametern (X1, X2, X3, ...) zusammenfasst, wobei das Modell des Funktionsgesetzes auch einen dynamischen Teil umfasst, der die zeitabhängigen Beziehungen zwischen dem geregelten Parameter (Y), der Bedienung (U) und der Vielzahl von Eingangsparametern (X1, X2, X3) zusammenfasst, wobei das Funktionsgesetzkompensationsmodul (7) den Kehrwert der von dem Lokalverstärkungsbestimmungsmodul (8) bestimmten Verstärkung intervenieren lässt.

2. System nach Anspruch 1, wobei die lokale Verstärkung aus den Werten berechnet wird, die von den Ausgängen eines statischen Teils eines Modells des Funktionsgesetzes für mindestens zwei unterschiedliche Werte der Bedienung angenommen werden, wobei die Eingangsparameter konstant gehalten werden.

3. System nach Anspruch 2, wobei die Differenz zwischen den beiden unterschiedlichen Werten der Bedienung kleiner als 0,25 % des Variationsbereichs der Bedienung ist und/oder die Differenz zwischen den beiden unterschiedlichen Werten der Bedienung einer Variation der Bedienung entspricht, die für eine Variation des geregelten Parameters von weniger als 1 % des Variationsbereichs des geregelten Parameters sorgt.

4. System nach einem der vorstehenden Ansprüche, wobei das Lokalverstärkungsbestimmungsmodul (8) konfiguriert ist, um einen vorbestimmten Sättigungswert abzugeben, wenn die von dem Bestimmungsmodul berechnete lokale Verstärkung unterhalb eines vordefinierten Werts ist.

5. System nach einem der vorstehenden Ansprüche, wobei das Lokalverstärkungsbestimmungsmodul (8) konfiguriert ist, damit mindestens bei jeder Änderung der Bedienung (U) und/oder der Eingangsparameter eine neue lokale Verstärkung bestimmt wird, um die Änderungen zu reflektieren.

6. System nach einem der vorstehenden Ansprüche, wobei das Funktionsgesetzkompensationsmodul (7) auch eine erste Transferfunktion des Kehrwerts des dynamischen Teils des Modells des Funktionsgesetzes umfasst.

7. System nach einem der vorstehenden Ansprüche, wobei das Modell des Funktionsgesetzes einen standfesten und einen nicht standfesten Teil umfasst und das Funktionsgesetzkompensationsmodul (7) eine statische Kompensation (70) umfasst, die dem Kehrwert der lokalen Verstärkung K entspricht und eine dynamische Kompensation eine direkte Schleife (72) und eine Rückkopplungsschleife (71) umfasst, die einen Rückmeldekreis bildet, wobei die direkte Schleife eine zweite Transferfunktion umfasst, die den Kehrwert des standfesten Teils des Modells des Funktionsgesetzes intervenieren lässt, und die Rückkopplungsschleife eine dritte Transferfunktion umfasst, die den nicht standfesten Teil des Modells des Funktionsgesetzes intervenieren lässt.

8. Baugruppe, umfassend eine Vorrichtung und ein System zur Regelung der Luftfahrtausrüstungsvorrichtung nach einem der vorstehenden Ansprüche.

**Claims**

1. System (1) for controlling a controlled parameter (Y) of an aeronautical equipment device (2), said controlled parameter being governed by an operating law of said device linking said controlled parameter to a command (U) and to a plurality of input parameters (X1, X2, X3, ...), said operating law being capable of being modelled by a transfer function constituting a mathematical model of the relationship between the command (U), the input parameters (X1, X2, X3, ...) and the controlled parameter (Y), said control system comprising a control loop servo-controlling said controlled parameter at a setpoint ($y_c$) by means of the command (U) controlling the device,
**characterised in that** the control loop comprises a regulator (3) comprising in series a corrector (6) and an operating law compensation module (7) whereof the transfer function is intended to compensate the transfer function of the operating law, the command (U) provided to the device corresponding to the output of the regulator (3), the system further comprising a local gain determination module (8) receiving the command (U) and the input parameters (X1, X2, X3, ...) and configured to determine the local gain of a static part of a model of the operating law representative of the gain of said controlled parameter in response to a variation in said command (U) in a steady operating speed of said operating law, said static part of the model of the operating law combining the independent relations of the time between the controlled parameter (Y), the command (U) and the plurality of input parameters (X1, X2, X3, ...), said model of the operating law also comprising a dynamic part combining the time-dependent relations between the controlled parameter (Y), the command (U) and the plurality of input parameters (X1, X2, X3), said operating law compensation module (7) involving the inverse of said local gain determined by the determination module (8).

2. System according to claim 1, wherein the local gain is calculated from the values taken by the outputs of a static part of a model of the operating law for at least two separate values of the command keeping the input parameters constant.

3. System according to claim 2, wherein the difference between the two separate values of the command is less than 0.25% of the range of variation in said command and/or the difference between the two separate values of the command corresponds to a variation in said command causing a variation in the controlled parameter less than 1% of the range of variation in said controlled parameter.

4. System according to any one of the preceding claims, wherein the local gain determination module (8) is configured to deliver a predetermined saturation value when the local gain calculated by said determination module is below a predefined value.

5. System according to any one of the preceding claims, wherein the local gain determination module (8) is configured so that at least with each change of the command U and/or the input parameters, a new local gain is determined to reflect said changes.

6. System according to any one of the preceding claims, wherein the operating law compensation module (7) also comprises a first transfer function of the inverse of the dynamic part of the model of the operating law.

7. System according to any one of the preceding claims, wherein the model of the operating law comprises a reversible part and an irreversible part, and the operating law compensation module (7) comprises a static compensation (70) which corresponds to the inverse of the local gain K and a dynamic compensation comprising a forward path (72) and a feedback path (71) constituting a feedback loop, wherein the forward path comprises a second transfer function involving the inverse of the reversible part of the model of the operating law and the feedback path comprises a third transfer function involving the irreversible part of the model of the operating law.

8. Assembly comprising a device and a system for controlling said aeronautical equipment device according to any one of the preceding claims.

# FIG 1

# FIG 2

EP 3 338 147 B1

# FIG 3

EP 3 338 147 B1

# FIG 4

EP 3 338 147 B1

FIG 5

EP 3 338 147 B1

# FIG 6

**FIG 7**

# FIG 8

EP 3 338 147 B1

**FIG 9**

EP 3 338 147 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 0192972 A